# EUROPEAN PATENT SPECIFICATION

(11) **EP 4 004 533 B1**
(45) Date of publication and mention of the grant of the patent: **17.04.2024**
(21) Application number: 20760907.4
(22) Date of filing: 24.07.2020
(51) Int. Cl.: G01N 27/28

(54) **DEVICE FOR ELECTROCHEMICAL MEASUREMENTS**
VORRICHTUNG FÜR ELEKTROCHEMISCHE MESSUNGEN
DISPOSITIF DE MESURES ÉLECTROCHIMIQUES

(30) Priority: 24.07.2019 PL 43070819
(43) Date of publication of application: 01.06.2022
(73) Proprietor: Instytut Fizyki Jadrowej Im. Henryka Niewodniczanskiego PAN, 31-342 Kraków (PL)
(72) Inventor: LASKOWSKA, Magdalena, 42-202 Czestochowa (PL); LASKOWSKI, Lukasz, 42-202 Czestochowa (PL)
(74) Representative: AOMB Polska Sp. z.o.o.
(86) International application number: PCT/IB2020/057018
(87) International publication number: WO 2021/014421

(56) References cited:
- DATABASE WPI Week 201651 Thomson Scientific, London, GB; AN 2016-45085D XP002800893, & CN 105 758 906 A (UNIV QINGDAO SCI & TECHNOLOGY) 13 July 2016 (2016-07-13)
- DATABASE WPI Week 201111 Thomson Scientific, London, GB; AN 2011-A02640 XP002800894, & CN 201 653 874 U (BAOSHAN IRON&STEEL CO LTD) 24 November 2010 (2010-11-24)
- DATABASE WPI Week 201429 Thomson Scientific, London, GB; AN 2014-H65146 XP002800895, & CN 103 630 590 A (CHINA NAT OFFSHORE OIL CORP) 12 March 2014 (2014-03-12)
- DATABASE WPI Week 201344 Thomson Scientific, London, GB; AN 2013-J01469 XP002800896, & CN 102 937 616 A (UNIV BEIJING CHEM TECHNOLOGY) 20 February 2013 (2013-02-20) cited in the application

## Description

The invention relates to a device for electrochemical measurements of materials which can be used to produce a working electrode.

In vessels commonly used for electrochemical measurements, as well as for other purposes, such as, for instance, electrochemical deposition of thin layers, the working electrode is fixed with an Allen screw system, which makes the assembly of the electrode cumbersome and time-consuming. Moreover, such a solution is related to the risk of leaks in case the clamping screws are insufficiently tightened. In other devices used, the working electrodes are placed inside vessels, which in turn makes it difficult to neutralize the electrode surface quickly.

CA2066901A1 discloses an apparatus for conducting electrical spectroscopy tests, comprising a vessel for use in containing an electrolytic fluid, a reference electrode in contact with said electrolytic fluid, a counter electrode in contact with said electrolytic fluid for supplying electric current to said electrolytic fluid, a working electrode assembly in contact with said electrolytic fluid, said working electrode assembly further comprising: a metal electrode having a flat end; a one-piece non-conductive housing interferably fit around said electrode such that said housing is in direct contact with said electrode and only said flat end is in contact with said electrolytic fluids. The working electrode is mounted in a nozzle located in the upper part of the container.

CN102735604B discloses a cell for electrochemical measurement of corrosion. The solution comprises a cell body with a sealed interior, a temperature measuring device, a temperature controller, a reference electrode, a supporting electrode, and a working electrode. The reference electrode, the supporting electrode, and the working electrode are placed in the nozzles in the top of the cell body, and the working electrode is attached to the outer wall of the body on the side of the body. The working electrode is mounted by means of a holder led through the cell, which at one end has an element pressing the electrode against the wall of the cell body. A sealing element in the form of a stopper ring is provided between the outer wall of the body and the electrode.

CN102937616B discloses a cell for electrochemical tests comprising an upper cover, a side housing, an electrolytic cell container, a water inlet and outlet, a bottom board, a support plate, a working electrode, a container foot, a platinum electrode, a salt bridge, and a reference electrode. The platinum electrode and the reference electrode are installed in the holes in the upper cover. The working electrode is installed on the outer side of the bottom board and is in contact with the electrolyte in the container through a hole in the board. Sealing rings are provided between the working electrode and the bottom board, and the working electrode is pressed against the board with a clamping screw. CN105758906, CN201653874 and CN103630590 provide alternative examples of known electrolytic vessels.

The present invention relates to a device for electrochemical measurements comprising an electrolytic fluid vessel, characterized in that the electrolytic fluid vessel comprises an electrolytic fluid chamber having a lower opening below which there is an essentially cylindrical portion of the vessel with an essentially cylindrical closure, wherein the walls of the cylindrical portion and the closure are threaded in such a way that the closure can move in the cylindrical portion approaching the lower opening and moving away from it, wherein the electrolytic fluid vessel has a side recess for inserting between the closure and the lower opening the working electrode with dimensions allowing the lower opening to be closed with it.

Preferably, the clear opening of the side recess communicates with the clear opening of the cylindrical portion.

Preferably, the diameter B of the cylindrical portion is equal to or greater than the diameter C of the lower opening.

Preferably, the device has a gasket to be placed between the working electrode and the outlet of the lower opening.

Preferably, the device has a base with a recess allowing to access the closure. Preferably, the closure is provided with a closure handle in the lower part and/or a pressure pin for pressing the working electrode in the upper part.

Preferably, the device comprises a counter electrode in the form of a metal rod or metal sheet or the side surface of an inverted truncated cone.

Preferably, the device is equipped with a cover to close the electrolytic fluid chamber.

Preferably, a reference electrode is mounted in the cover, preferably by means of an electrode holder arranged in the cover.

Preferably, a part of the electrode holder has a threaded outer surface, wherein the thread on the electrode holder matches the thread of the cover opening in which the electrode holder is located.

The main advantage of the solution according to the invention is that it enables to attach the working electrode quickly through the access panel (side recess), which increases the efficiency and comfort of work. Thanks to an efficient assembly system, it is possible to rinse the vessel with distilled water very quickly and thus neutralize the electrode surface. The clamping system does not damage the electrode surface and eliminates leaks.

The solution according to the invention is illustrated by an exemplary embodiment in the drawing, where the individual Figures show:
Fig. 1 - cross-section of the device,
Fig. 2 - cross-section of the vessel,
Fig. 3 - top view of the cover,
Fig. 4 - schematic view of the closure pressing the working electrode,
Fig. 5 - view of the counter electrode in the form of a plate (e.g. platinum plate) connected to a cable (e.g. a platinum wire),
Fig. 6 - view of a large-surface counter electrode in the form of the side surface of a cone with a projection allowing for connection with a crocodile clip.

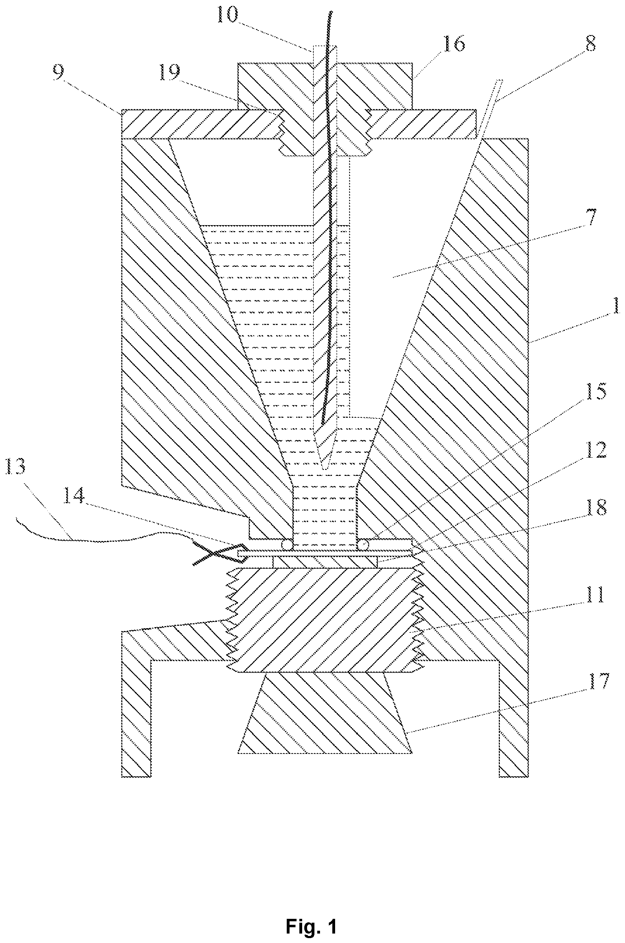

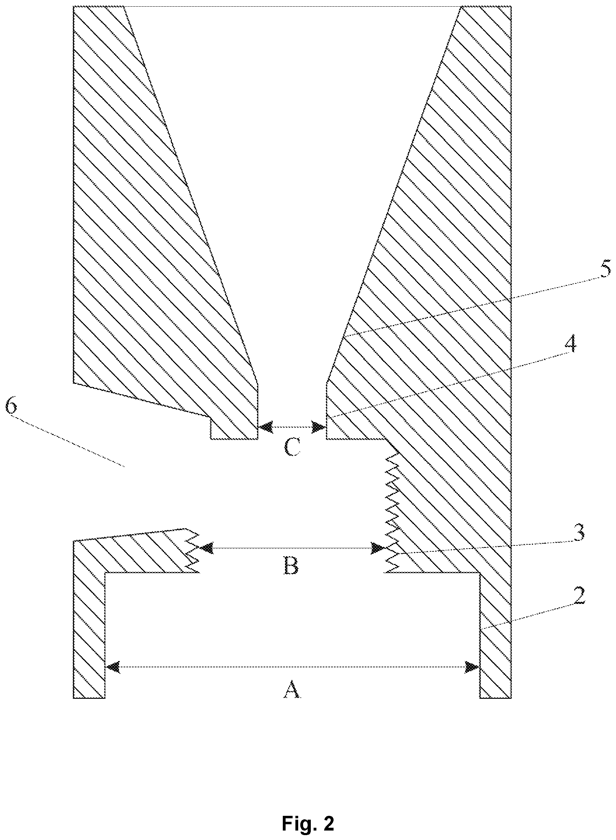

The device for electrochemical measurements, in the embodiment shown in Figs. 1 and 2, comprises a vessel 1 in the form of a body, inside which there is an irregular axial through-recess, which consists of a lower cylindrical portion at the base of the body of diameter A forming the base 2, passing upwardly into a cylindrical portion 3 of diameter B, then passing into a portion of diameter C, forming the lower opening 4 of the electrolytic fluid chamber 5 in the shape of an inverted truncated cone. The diameter A is greater than the diameter B, and the diameter B is greater than the diameter C. The lower opening 4 of radius C is provided with a circumferential gasket 15.

The walls of the cylindrical portion 3 of diameter B are threaded. At the height of the cylindrical portion 3 of diameter B a side recess 6 is located, the axis of which is parallel to the base of the body, and the clear opening of the side recess 6 communicates with the clear opening of the cylindrical portion 3 of diameter B.

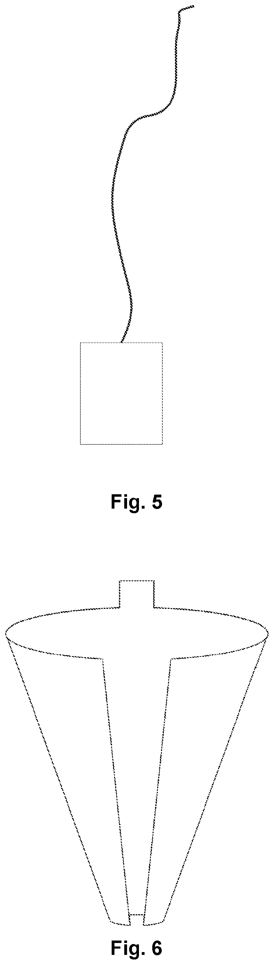

Inside the electrolytic fluid chamber 5 a counter electrode 7 is installed with a slight play, in the form of a metal sheet shaped like the side surface of a truncated cone open at the top, as shown in Fig. 5, or shaped as a portion of the side surface of a truncated cone, as shown in Fig. 6. The counter electrode 7, at the upper edge, is provided with a tab 8 protruding beyond the upper contour of the body.

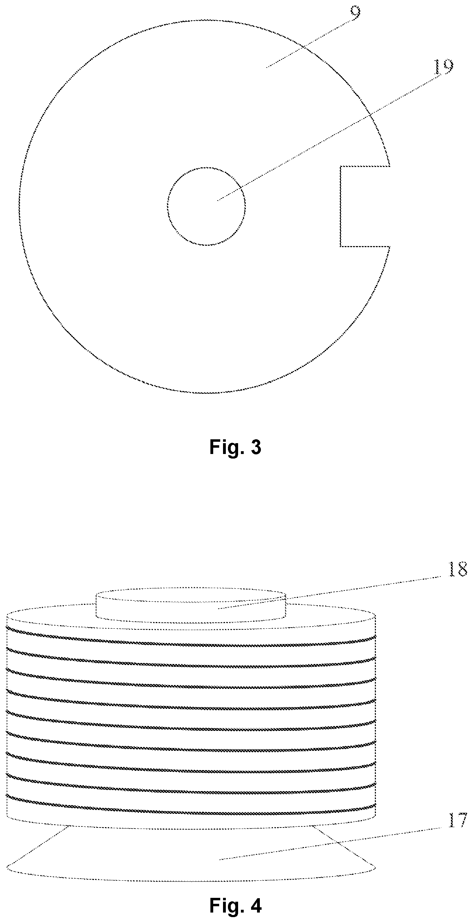

The clear opening of the electrolytic fluid chamber 5 is closed at the top with a cover 9 (Fig. 3) comprising a central cover opening 19, through which a reference electrode 10 is inserted into the vessel 1. The cover opening 19 is threaded, and a threaded electrode holder 16, in which the reference electrode 10 is mounted, is partially screwed into the cover opening 19. Further, the cover 9 of the vessel 1 comprises a cut-out matching the protrusion 8 of the counter electrode 7.

By contrast, at the bottom of the body, in the cylindrical portion of radius B, a cylindrical closure 11 threaded in the central part is screwed into the cylindrical portion 3 of diameter B (Fig. 4). On the upper surface of the closure 11 a flat working electrode 12 is placed horizontally, pressed with a pressure pin 18 (being a part of the closure 11) to the circumferential gasket 15 and closing tightly from the bottom the lower opening 4 of radius C. An electric cable 13 ended with a clamp 14, which is connected to the working electrode 12, is inserted into the interior of the body. The closure 11 is equipped with an ergonomic handle 17.

## Claims

1. Device for electrochemical measurements comprising an electrolytic fluid vessel, **characterized in that** the electrolytic fluid vessel (1) comprises an electrolytic fluid chamber (5) having a lower opening (4) below which there is an essentially cylindrical portion (3) of the vessel with an essentially cylindrical closure (11), wherein the walls of the cylindrical portion (3) and the closure (11) are threaded in such a way that the closure (11) is configured to move in the cylindrical portion (3) approaching the lower opening (4) and moving away from it, wherein the electrolytic fluid vessel has a side recess (6) in essentially cylindrical portion (3) for inserting between the closure (11) and the lower opening (4) a working electrode (12) with dimensions allowing the lower opening (4) to be closed with it.

2. The device according to claim 1, **characterized in that** a clear opening of the side recess (6) communicates with a clear opening of the cylindrical portion (3).

3. The device according to claim 1 or 2, **characterized in that** the diameter (B) of the cylindrical portion (3) is equal to or greater than the diameter (C) of the lower opening (4).

4. The device according to claim 1, or 2, or 3, **characterized in that** the device has a gasket (15) adapted to be placed between the working electrode (12) and the outlet of the lower opening (4).

5. The device according to any preceding claim, **characterized in that** it has a base (2) with a recess allowing to access the closure (11).

6. Device according to any preceding claim, **characterized in that** the closure (11) is provided with a closure handle (17) in the lower part and/or a pressure pin (18) for pressing the working electrode (12) in the upper part.

7. The device according to any preceding claim, **characterized in that** it comprises a counter electrode (7) in the form of a metal rod or metal sheet or the side surface of an inverted truncated cone.

8. The device according to any preceding claim, **characterized in that** it is equipped with a cover (9) to close the electrolytic fluid chamber (5).

9. The device according to claim 8, **characterized in that** a reference electrode (10) is mounted in the cover (9).

10. The device according to claim 9, **characterized in that** the reference electrode (10) is mounted in the cover (9) by means of an electrode holder (16) arranged in the cover (9).

11. The device according to claim 10, **characterized in that** a part of the electrode holder (16) has a threaded outer surface, wherein the thread on the electrode holder (16) matches the thread of the cover opening (19) in which the electrode holder (16) is located.

## Patentansprüche

1. Eine Vorrichtung für elektrochemische Messungen, die ein Elektrolytbehälter umfasst, **dadurch gekennzeichnet, dass** der Elektrolytbehälter (1) eine Elektrolytkammer (5) mit einer unteren Öffnung (4) umfasst, unter der sich ein im Wesentlichen zylindrischer Teil (3) des Behälters mit einem im Wesentlichen zylindrischen Verschluss (11) befindet, wobei die Wände des zylindrischen Teils (3) und des Verschlusses (11) mit einem Gewinde versehen sind, so dass der Verschluss (11) so konfiguriert ist, dass er sich in dem zylindrischen Teil (3)
der unteren Öffnung (4) nähert und sich von dieser entfernt, wobei das Elektrolytbehälter eine seitliche Aussparung (6) in dem im Wesentlichen zylindrischen Teil (3) aufweist, um zwischen dem Verschluss (11) und der unteren Öffnung (4)
eine Arbeitselektrode (12) einzuführen, deren Abmessungen es ermöglichen,
die untere Öffnung (4) mit ihr zu verschließen.

2. Die Vorrichtung nach Anspruch 1, **dadurch gekennzeichnet, dass** eine lichte Öffnung der seitlichen Aussparung (6) mit einer lichten Öffnung des zylindrischen Teils (3) in Verbindung steht.

3. Die Vorrichtung nach Anspruch 1 oder 2, **dadurch gekennzeichnet, dass** der Durchmesser (B)
des zylindrischen Teils (3) dem Durchmesser (C) der unteren Öffnung (4) entspricht oder größer ist als
dieser.

4. Die Vorrichtung nach Anspruch 1, 2 oder 3, **dadurch gekennzeichnet, dass** die Vorrichtung eine Dichtung (15) aufweist,
die zwischen der Arbeitselektrode (12) und dem Auslass der unteren Öffnung (4) angeordnet werden kann.

5. Die Vorrichtung nach einem der vorhergehenden Ansprüche, **dadurch gekennzeichnet, dass** sie eine Basis (2) mit einer Aussparung aufweist, die den Zugang zu dem Verschluss (11) ermöglicht.

6. Die Vorrichtung nach einem der vorhergehenden Ansprüche, **dadurch gekennzeichnet, dass** der Verschluss (11) im unteren Teil mit einem Verschlussgriff (17) und/oder im oberen Teil mit einem Druckstift (18) zum Andrücken der Arbeitselektrode (12) versehen ist.

7. Die Vorrichtung nach einem der vorhergehenden Ansprüche, **dadurch gekennzeichnet, dass** sie eine Gegenelektrode (7) in Form einer Metallstange oder eines Metallblechs oder der Seitenfläche eines umgekehrten Kegelstumpfs umfasst.

8. Die Vorrichtung nach einem der vorhergehenden Ansprüche, **dadurch gekennzeichnet, dass** sie mit einem Deckel (9) zum Verschließen der Elektrolytkammer (5) ausgestattet ist.

9. Die Vorrichtung nach Anspruch 8, **dadurch gekennzeichnet, dass** eine Referenzelektrode (10) in dem Deckel (9) angebracht ist.

10. Die Vorrichtung nach Anspruch 9, **dadurch gekennzeichnet, dass** die Referenzelektrode (10) über einen im Deckel (9) angeordneten Elektrodenhalter (16) im Deckel (9) befestigt ist.

11. Die Vorrichtung nach Anspruch 10, **dadurch gekennzeichnet, dass** ein Teil des Elektrodenhalters (16) eine mit einem Gewinde versehene Außenfläche aufweist, wobei das Gewinde am Elektrodenhalter (16) mit dem Gewinde in der Deckelöffnung (19), in der sich der Elektrodenhalter (16) befindet, übereinstimmt.

## Revendications

1. Dispositif de mesures électrochimiques comprenant un récipient à fluide électrolytique, **caractérisé en ce que** le récipient à fluide électrolytique (1) comprend une chambre à fluide électrolytique (5) ayant une ouverture inférieure (4) au-dessous de laquelle il y a une partie essentiellement cylindrique (3) du récipient avec une fermeture essentiellement cylindrique (11), dans lequel les parois de la partie cylindrique (3) et de la fermeture (11) sont filetées de telle sorte que la fermeture (11) est configurée pour se déplacer dans la partie cylindrique (3) en s'approchant de
l'ouverture inférieure (4) et en s'en éloignant, dans lequel le réservoir à fluide électrolytique présente un évidement latéral (6) dans la partie essentiellement cylindrique (3) pour insérer entre la fermeture (11) et l'ouverture inférieure (4) une
électrode de travail (12) dont les dimensions
permettent d'obturer l'ouverture inférieure (4) avec celle-ci.

2. Le dispositif selon la revendication 1, **caractérisé en ce qu'**une ouverture libre de l'évidement latéral (6) est en communication avec une ouverture libre de la partie cylindrique (3).

3. Le dispositif selon la revendication 1 ou 2, **caractérisé en ce que** le diamètre (B) de la partie cylindrique (3) est égal ou supérieur au diamètre (C) de l'ouverture inférieure (4).

4. Le dispositif selon la revendication 1, ou 2, ou 3, **caractérisé en ce que** le dispositif comporte un joint (15) adapté
pour être placé entre l'électrode de travail (12) et la sortie de l'ouverture inférieure (4).

5. Le dispositif selon l'une quelconque des revendications précédentes, **caractérisé en ce qu'**il comporte une base (2) avec un évidement permettant d'accéder à la fermeture (11).

6. Dispositif selon l'une quelconque des revendications précédentes, **caractérisé en ce que** la fermeture (11) est pourvue d'une poignée de fermeture (17) dans la partie inférieure et/ou d'une goupille de pression (18) pour presser l'électrode de travail (12) dans la partie supérieure.

7. Le dispositif selon l'une quelconque des revendications précédentes, **caractérisé en ce qu'**il comprend une contre-électrode (7) sous la forme d'une tige métallique ou d'une feuille métallique ou de la surface latérale d'un cône tronqué inversé.

8. Le dispositif selon l'une quelconque des revendications précédentes, **caractérisé en ce qu'**il est muni d'un couvercle (9) pour fermer la chambre à fluide électrolytique (5).

9. Le dispositif selon la revendication 8, **caractérisé en ce qu'**une électrode de référence (10) est montée dans le couvercle (9).

10. Le dispositif selon la revendication 9, **caractérisé en ce que** l'électrode de référence (10) est montée dans le couvercle (9) au moyen d'un porte-électrode (16) disposé dans le couvercle (9).

11. Le dispositif selon la revendication 10, **caractérisé en ce qu'**une partie du porte-électrode (16) a une surface extérieure filetée, dans lequel le filetage du porte-électrode (16) correspond au filetage de l'ouverture d couvercle (19) dans laquelle le porte-électrode (16) est situé.
